# EUROPEAN PATENT APPLICATION

(11) **EP 1 625 819 A1**
(43) Date of publication of application: **15.02.2006**
(21) Application number: 04380168.7
(22) Date of filing: 09.08.2004
(51) Int. Cl.: A47J 43/044, A47J 43/07, A47J 43/08

(54) **Accessory for hand blender**

(71) Applicant: Electrodomesticos Taurus S.L., 25790 Oliana (Lleida) (ES)
(72) Inventor: Trench Roca, Lluis, 25790 Oliana Lleida (ES); Codina Vilana, Antonio, 25790 Oliana Lleida (ES)
(74) Representative: Manresa Val, Manuel

(57) **Abstract**

Comprises a container 2 with a lower support 1, a lid (7), with an inner orifice in order to the pass of the transmission means, coupling means located in said hand blender (9) **characterized** in that includes an axis (4): fixed to the base (10) of the container, with means (12) to allow rotation of the axis around itself with means (5) for its coupling to the hand blender and with blades (3) or blending portions joined to the mentioned axis.

## Description

Accessory for hand blenders that comprises a container with a lower support, a lid with a inner orifice in order to the pass of the transmission means, coupling means located in said hand blender characterized in that said accessory includes an axis fixed to the base of the container, with means to allow rotation of the axis around itself, with means for its coupling to the hand blender, and with blades or blending portions joined to the mentioned axis.

### BACKGROUNDS OF THE INVENTION

Are known in the state of the art different kinds of blenders, cutters, mixers or mincers that include the operating means:
(A) of the kind of "rod" wherein the cutting blades are located in the same rod of said apparatus and a separate container, disconnected to the apparatus,
(B) of the kind of "vessel" wherein the cutting blades are fixed in the base of a container which is a part of the apparatus and said container been permanent connected to the driving body during its operation.

It is in the state of the art the EP 1026978 in the name of D. SHANE ROBERT MCGILL that relates to food blending apparatus and to a method of dispensing blended food products such as milk shakes in disposable containers having integral blending means located internally of the container, which blending means is drivingly connectable to drive means externally of and separate from the container, wherein the container is made and nested with other containers, the container is de-nested, charged with product ingredients at a charging location remote from a dispensing location, the container is sealed to seal the ingredients within the container, the container and its contents are cooled to at least a serving temperature, at the dispensing location, the blending means is releasably drivingly connected to said drive means, and the drive means is actuated to cause the blending means to operate and blend the ingredients within the container, access is gained to the blended food product within the container whereby to consume said blended product from the container, and the container is disposed of.

It is also necessary to mention of the group of "food processor" to the EP 0966909 in the name of VORWERK & CO. INTERHOLDING GMBH that refers to a kitchen apparatus that has a mixing container and a mixing/stirring rotor in the mixing container. The invention refers to a kitchen mixer that has a mixing container, a mixing/stirring rotor placed in the mixing container, been able to heat the lower part of the mixing container. To advantageous improve a kitchen apparatus of this type an adjustment of the mixing rotor is provided wherein the mixing phases are suspended in regular pauses.

### BRIEF DESCRIPTION OF THE INVENTION

The present invention is a considerable advance in the sector of small electrical appliances, specifically to those in the field of hand blenders accessories.

One of the greatest advantages of hand blenders is that a diverse usefulness is allowed by only changing the final accessory.

It is been observed as well, that there are some kinds of food products such as "gazpacho" that are more effectively prepared in a vessel blender than in a conventional hand blender.

In the present invention the inventors succeed in combine the advantages of the hand blenders with the features of the vessel blenders, it means, allowing on the one hand, the use of the hand blender as driving group and on the other hand it is been designed an accessory that provides the features of a vessel blender.

This new accessory has the distinguishing feature that the traction coupling to the blades comes from the upper part of the vessel.

Moreover, it gives the advantage to make possible the extraction of the axis and blades set at the same time and with a simple action of pull the axis, what simplify the assembly / disassembly operation and the risk of cut of the user with the blades during for example, the cleaning activities.

It is an object of the present invention an accessory for hand blenders that comprises a container with a lower support, a lid with a inner orifice in order to the pass of the transmission means, coupling means located in said hand blender characterized in that said accessory includes an axis fixed to the base of the container, with means to allow rotation of the axis around itself, with means for its coupling to the hand blender, and with blades or blending portions joined to the mentioned axis.

### BRIEF DESCRIPTION OF THE DRAWINGS

With the purpose to facilitate the explanation two sheets of drawings are attached to the present description, in which a practical case of an embodiment has been reproduced, which is mentioned only for exemplificative, non limitative of the scope of the present invention:
- figure 1 is a perspective view of the accessory for hand blender, object of the present invention.
- figure 2 is a front view of the hand blender set coupled to the mentioned accessory, object of the present invention.

### PREFERRED EMBODIMENT OF THE PATENT APPLICATION

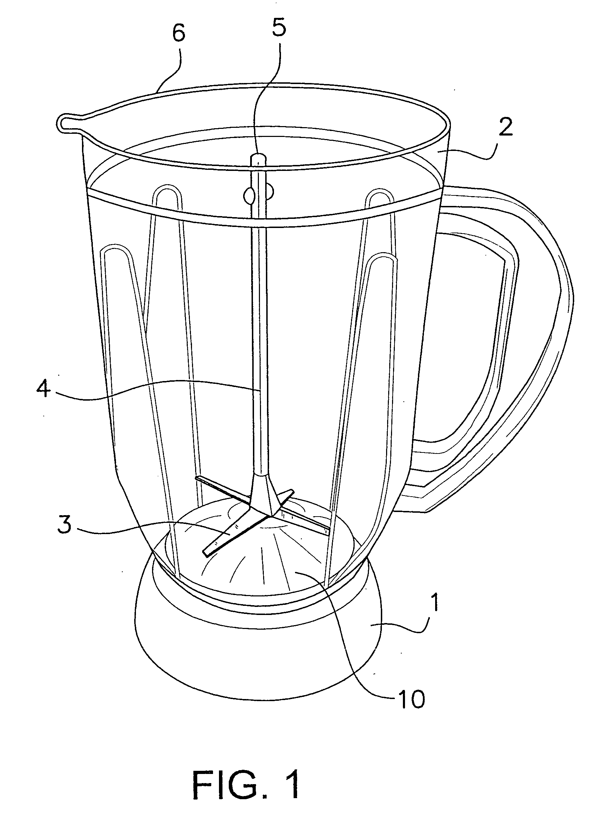

Referring to figure 1 there is shown a container 2 with a lower support 1 and a base 10, an axis 4 with means 5 for its coupling to the hand blender, a blades 3 or blending portions and the mouth 6 of the container.

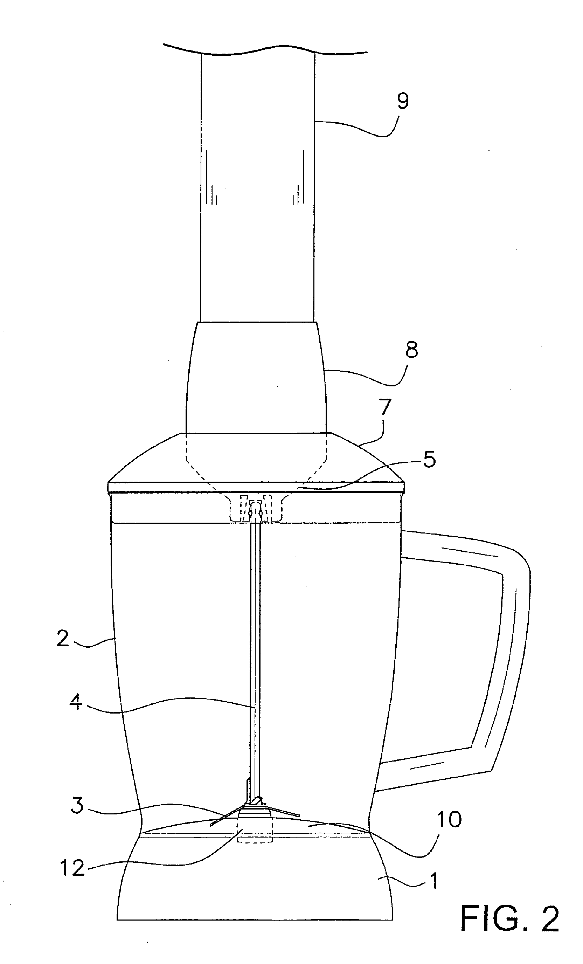

Referring now to figure 2 there is shown the mentioned lower support 1, the container 2, the base 10, the axis 4, the coupling means 5, the blades 3 or blending portions, a hand blender 9, an adapter 8, means 12 to allow the rotation of the mentioned axis around itself and a lid 7.

In a preferred embodiment, the user places the solid or liquid food product to be blended or cut into the container 2. Subsequently lid 7 is fitted or fixed in the mouth 6 of the container.

Then the user inserts an adapter 8 to the hand blender 9 to insert later the blender 9 inside an orifice (not illustrated in the drawings) made in the lid 7, so as the coupling means 5 of the axis 4 get coupled to the adapter 8 (as in figure 2).

Moreover, there is the possibility that the same hand blender 9 does not need the adapter and get directly coupled to the rod 4 (not illustrated in drawings).

Next, the hand blender 9 bring into operation making turn the axis 4 helped by the means 12 to allow the axis to rotate around its own axis.

So, it achieves that the blades 3 or blending portions make the function with the solid or liquid food product previously placed into the container.

Once the highly level of cutting or blending is reached, the hand blender is stopped and removed together with the adapter 8 of the lid 7.

Immediately after, the lid 7 gets free from the mouth 6 of the container and the same is empty of its contents in a plate or other recipient (not illustrated in drawings).

After that, the blades 3 or blending portions which are part of de axis set 4, support 10 can be extracted and tugged and putted for its cleaning into, for example, a dishwasher with not contact with the hands of the user.

As it could be observed, the present invention has the great advantage that there is not necessary to manipulate the blades 3 or blending portions for its cleaning in a, for example, a dishwasher, feature that makes it specially useful to avoid cuts or wounds in the hands.

At the same time, it is a complete accessory for hand blender 9, it means that said accessory just as it is, does not need hardly to be mounted and it is enough to bring into operation.

The present patent of invention describes a new accessory for hand blenders. The examples mentioned here are not limitative of the present invention, for that reason it will be able to have different applications and/or adaptations, all of them within the scope of the following claims.

## Claims

1. Accessory for hand blenders, of the type that comprises a container with a lower support, a lid, with an inner orifice in order to the pass of the transmission means, coupling means located in said hand blender (9) **characterized in that** includes an axis (4):
- fixed to the base (10) of the container, with means to allow rotation of the axis around itself
- with means for its coupling to the hand blender and
- with blades or blending portions joined to the mentioned axis

2. Accessory in accordance with claim 1 **characterized in that** the referred hand blender (9) includes an adapter (8) to be coupled to the coupling means (5) of the rod (4).
